# EUROPEAN PATENT APPLICATION

(11) **EP 4 772 884 A1**
(43) Date of publication of application: **08.07.2026**
(21) Application number: 25225700.1
(22) Date of filing: 19.12.2025
(51) Int. Cl.: G01N 35/00, G01N 35/04

(54) **SYSTEM AND METHOD FOR CONVEYING SAMPLE, AND COMPUTER EQUIPMENT**

(30) Priority: 07.01.2025 CN 202510034049
(71) Applicant: Shenzhen New Industries Biomedical Engineering Co., Ltd., Shenzhen, Guangdong 518122 (CN)
(72) Inventor: WU, Jinhong, Shenzhen 518122 (CN); TANG, Junhui, Shenzhen 518122 (CN); LI, Jinqi, Shenzhen 518122 (CN); LI, Longji, Shenzhen 518122 (CN); PAN, Jun, Shenzhen 518122 (CN); XIAO, Liyang, Shenzhen 518122 (CN); ZENG, Kaiying, Shenzhen 518122 (CN)
(74) Representative: Zacco GmbH

(57) **Abstract**

The invention relates to a system and method for conveying a sample, and a computer equipment. According to the invention, when an urgent sample to be tested needs to enter an inner track and be preferentially extracted by an extraction assembly, positional order of a carrier carrying an ordinary sample to be tested and a carrier carrying the urgent sample to be tested can be adjusted according to a running condition of the carriers on the inner track at a current moment, such that the urgent sample to be tested can be extracted and tested before the ordinary sample to be tested, and the ordinary sample to be tested that suffers queue jumping can also continue moving in the inner track. After the urgent sample to be tested is extracted, the ordinary sample can enter a sample extraction place through the inner track in time to be extracted by the extraction assembly. Preferential processing of the urgent sample to be tested and normal extraction and testing of the ordinary sample to be tested are balanced, and running efficiency of the entire conveying system is prevented from being affected by excessive sacrifice of the ordinary sample to be tested.

## Description

The invention claims the priority to Patent Application No. 202510034049.7, filed to the China National Intellectual Property Administration on January 7, 2025 and entitled "System and Method for Conveying Sample, and Computer Equipment".

### Technical Field

The invention relates to the technical field of medical instruments, in particular to a system and method for conveying a sample, and a computer equipment.

### Background

In the outpatient service, a mass of collected samples need to be tested. In order to improve the efficiency and capacity to test the samples, numerous analytical instruments are usually assembled in a production line. Input samples are delivered to designated analytical instruments according to preset test items based on conveying tracks of the production line, so as to be analyzed and tested. The samples to be tested are divided into ordinary samples to be tested and urgent samples to be tested. The urgent samples to be tested take priority over the ordinary samples to be tested, and need a preferential test. Hence, according to a processing solution in the prior art, when an urgent sample to be tested enters the production line, all queued ordinary samples to be tested in the production line are typically "emptied", that is, the ordinary samples to be tested stop being delivered to the designated analytical instrument to be analyzed and tested. After the urgent sample to be tested is tested, the ordinary samples to be tested are delivered to the analytical instruments through a new cycle in the production line. If a new urgent sample to be tested is added halfway, the ordinary samples to be tested are rearranged for a new cycle according to the above processing method.

However, the ordinary samples are held on the conveying track for a long time without being tested by a current processing method. The normal test of the ordinary samples is interrupted consequently, extreme interference in the normal test of the ordinary samples to be tested is caused, and resource waste is further caused. As a result, it is necessary to balance preferential processing of the urgent samples to be tested and normal processing of the ordinary samples to be tested.

### Summary

In view of that, it is necessary to provide a system and method for conveying a sample, and a computer equipment for solving the technical problem in the prior art that preferential scheduling of an urgent sample and normal processing of an ordinary sample cannot be balanced.

In a first aspect, the invention provides a system for conveying a sample. The system includes: a conveying assembly including a main track and a first inner track, wherein the main track and the first inner track are both used to allow a carrier to move independently and circularly in a designated direction, the carrier is used to carry the sample, and the first inner track has a sample extraction place; a first transfer assembly, wherein the first transfer assembly is arranged between the main track and the first inner track and is used to allow the carrier to move between the main track and the first inner track, the first inner track has a first inlet and a first outlet, the first transfer assembly connects the first inlet and the first outlet, and the sample extraction place is located between the first inlet and the first outlet; an extraction assembly, wherein the extraction assembly is arranged at an arrangement place corresponding to the sample extraction place of the first inner track and is used to extract the sample; a first recognition assembly, wherein the first recognition assembly is arranged at a connection port of the first transfer assembly with the main track and the first inlet of the first inner track and is used to recognize a sample type of the sample carried by the carrier entering the first transfer assembly from the main track, and the sample type includes an urgent sample to be tested and an ordinary sample to be tested; and a controller, wherein the controller is used to control the first transfer assembly to transfer the carrier carrying the urgent sample to be tested from the main track to the first inner track when the first recognition assembly recognizes the urgent sample to be tested, and convey at least part of original carriers carrying the ordinary samples to be tested on the first inner track to the first outlet, and the controller is used to control the first transfer assembly to transfer the carrier carrying an untested ordinary sample to be tested from the first outlet to the first inlet to enter the first inner track when the original carrier carrying the ordinary sample to be tested reaches the first outlet.

In an embodiment, the system for conveying the sample further includes: a second transfer assembly, wherein the second transfer assembly is arranged on the first inner track and is used to transfer the carrier to the sample extraction place, a track from the first inlet to the second transfer assembly is an upstream track of the first inner track, and a track from the second transfer assembly to the first outlet is a downstream track of the first inner track; and a detection assembly, wherein the detection assembly is arranged at an inlet of the second transfer assembly on the first inner track and is used to detect a target carrier, and the target carrier is a carrier reaching a detection area of the detection assembly; wherein the controller is used to control the extraction assembly to execute a sample extraction operation on a sample to be tested carried by the target carrier and then control the second transfer assembly to convey the carrier carrying the ordinary sample to be tested behind the target carrier on the first inner track to the downstream track after the carrier carrying the urgent sample to be tested enters the first inner track.

In an embodiment, after the second transfer assembly conveys the carrier carrying the ordinary sample to be tested behind the target carrier on the first inner track to the downstream track, the controller is further used to: control the second transfer assembly to transfer the carrier carrying the urgent sample to be tested to the sample extraction place and control the extraction assembly to execute the sample extraction operation on the urgent sample to be tested, and then sequentially execute an extraction operation on the ordinary samples to be tested according to sequential order in which the carriers carrying the ordinary samples to be tested reach the sample extraction place.

In an embodiment, the second transfer assembly is provided with at least two sample feeding recesses, the sample feeding recess is used to accommodate the carrier, and an included angle between adjacent sample feeding recesses relative to a rotation center of the second transfer assembly is 90 degrees or 180 degrees.

In an embodiment, the controller is further used to control the first transfer assembly to transfer the carrier carrying the ordinary sample to be tested to the upstream track when a remaining temporary storage number of the first inner track is greater than a preset reserved number and the first recognition assembly recognizes the carrier carrying the ordinary sample to be tested, wherein the remaining temporary storage number equals a difference between a total number of the carriers carrying the urgent samples to be tested and the carriers carrying the ordinary samples to be tested that are accommodable on the first inner track and a total number of the carriers carrying the urgent samples to be tested and the carriers carrying the ordinary samples to be tested that are currently accommodated, and the preset reserved number equals a number of temporary storage places reserved in advance by the first inner track for the carriers carrying the urgent samples to be tested.

In an embodiment, the controller is further used to control the first transfer assembly to transfer the carrier carrying the ordinary sample to be tested from the first outlet to the main track when the remaining temporary storage number of the first inner track is less than or equal to the preset reserved number and the carrier carrying the ordinary sample to be tested reaches the first outlet, and to control the first transfer assembly to transfer the carrier carrying the ordinary sample to be tested to the main track when the remaining temporary storage number of the first inner track is less than or equal to the preset reserved number and the first recognition assembly recognizes the carrier carrying the ordinary sample to be tested.

In an embodiment, the system for conveying the sample further includes: a second recognition assembly, wherein the second recognition assembly is arranged at the first outlet and is used to recognize the sample type of the sample carried by the carrier reaching the first outlet; and when the carrier carrying the ordinary sample to be tested reaches the first outlet and the second recognition assembly recognizes an untested ordinary sample to be tested, the controller controls the first transfer assembly to transfer the carrier carrying the untested ordinary sample to be tested from the first outlet to the first inlet to enter the first inner track.

In an embodiment, the conveying assembly further includes a second inner track, the main track and the second inner track are in communication through a third transfer assembly, and the system further includes a processing assembly connected with the second inner track and used to process a sample prior to testing; and the controller is further used to control the third transfer assembly to transfer the carrier carrying the urgent sample to be tested from the main track to the second inner track, determine arrangement order of the carrier carrying the urgent sample to be tested and the carrier carrying the ordinary sample to be tested on the second inner track, and cause the processing assembly to sequentially process the urgent sample to be tested and the ordinary sample to be tested.

In a second aspect, the invention further provides a method for conveying a sample. The method includes: recognizing a sample type of the sample carried by a carrier through a first recognition assembly and a second recognition assembly, wherein the sample type includes an urgent sample to be tested and an ordinary sample to be tested; the first recognition assembly is arranged at a connection port of a first transfer assembly with a main track and a first inner track, the main track and the first inner track are used to drive the carrier to move independently and circularly in a designated direction, and the main track and the first inner track are in communication through the first transfer assembly to allow the carrier to move between the main track and the first inner track; and the first inner track has a sample extraction place, and a first inlet and a first outlet that are in communication with the first transfer assembly, the sample extraction place is located between the first inlet and the first outlet, and the second recognition assembly is arranged at the first outlet; controlling the first transfer assembly to transfer the carrier carrying the urgent sample to be tested from the main track to the first inner track when the first recognition assembly recognizes that the sample type of the sample carried by the carrier located at the first transfer assembly on the main track is the urgent sample to be tested; conveying at least part of original carriers carrying the ordinary samples to be tested on the first inner track to the first outlet; and controlling the first transfer assembly to transfer the carrier carrying an untested ordinary sample to be tested from the first outlet to the first inlet to enter the first inner track when the original carrier carrying the ordinary sample to be tested reaches the first outlet.

In a third aspect, the invention further provides a computer equipment. The computer equipment includes a memory and a processor, wherein the memory stores a computer program, and when executing the computer program, the processor implements steps as follows: recognizing a sample type of a sample carried by a carrier through a first recognition assembly and a second recognition assembly, wherein the sample type includes an urgent sample to be tested and an ordinary sample to be tested; the first recognition assembly is arranged at a connection port of a first transfer assembly with a main track and a first inner track, the main track and the first inner track are used to drive the carrier to move independently and circularly in a designated direction, and the main track and the first inner track are in communication through the first transfer assembly to allow the carrier to move between the main track and the first inner track; and the first inner track has a sample extraction place, and a first inlet and a first outlet that are in communication with the first transfer assembly, the sample extraction place is located between the first inlet and the first outlet, and the second recognition assembly is arranged at the first outlet; controlling the first transfer assembly to transfer the carrier carrying the urgent sample to be tested from the main track to the first inner track when the first recognition assembly recognizes that the sample type of the sample carried by the carrier located at the first transfer assembly on the main track is the urgent sample to be tested; conveying at least part of original carriers carrying the ordinary samples to be tested on the first inner track to the first outlet; and controlling the first transfer assembly to transfer the carrier carrying an untested ordinary sample to be tested from the first outlet to the first inlet to enter the first inner track when the original carrier carrying the ordinary sample to be tested reaches the first outlet.

According to the system and method for conveying the sample, and the computer equipment, when the urgent sample to be tested needs to enter the inner track and be preferentially extracted by the extraction assembly, positional order of the carrier carrying the ordinary sample to be tested and the carrier carrying the urgent sample to be tested can be adjusted according to a running condition of the carriers on the inner track at a current moment, such that the urgent sample to be tested can be extracted and tested before the ordinary sample to be tested, and the ordinary sample to be tested that suffers queue jumping can also continue moving on the inner track. After the urgent sample to be tested is extracted, the ordinary sample can enter the sample extraction place through the inner track in time to be extracted by the extraction assembly. Preferential processing of the urgent sample to be tested and normal extraction and testing of the ordinary sample to be tested are balanced, and running efficiency of the entire conveying system is prevented from being affected by excessive sacrifice of the ordinary sample to be tested.

### Brief Description of the Drawings

Fig. 1 is a schematic structural diagram of a system in some embodiments;
Fig. 2a-Fig. 2b are schematic partial structural diagrams of a system in some embodiments;
Fig. 3 is a schematic diagram of a sample feeding recess in some embodiments;
Fig. 4a-Fig.4b are schematic diagrams of position switching of a sample feeding recess in some embodiments;
Fig. 5 is a schematic diagram of a transfer assembly in some embodiments;
Fig. 6a-Fig. 6b are schematic diagrams of a processing assembly in some embodiments;
Fig. 7 is a schematic flowchart of steps of a method for conveying a sample in some embodiments; and
Fig. 8 is an internal structural diagram of a computer equipment in some embodiments.

### Detailed Description of the Embodiments

In order to make objectives, technical solutions, and advantages of the invention clearer, the invention will be further described below in detail with reference to accompanying drawings and embodiments. It should be noted that the embodiments in the invention and features in the embodiments can be combined mutually without conflict.

It should be noted that the terms used herein are merely for describing specific implementations, and are not intended to limit illustrative implementations according to the invention. As used herein, the singular form is also intended to include the plural form unless the context clearly indicates otherwise. Further, it should be understood that when the terms "comprise" and/or "include" are used in this description, the terms denote presence of features, steps, operations, devices, assemblies and/or their combinations.

In addition, description involving "first", "second", etc., if any, in the invention is merely used for describing purposes and cannot be understood as indicating or implying relative importance, or implicitly indicating the number of indicated technical features. Thus, the features defined with "first" and "second" can explicitly or implicitly include at least one of the features. Terms "and/or" and "as well as/or" in the text have the same meaning, and both mean inclusion of three parallel solutions. For example, "A as well as/or B" includes a solution A, a solution B or a solution that is simultaneously satisfied by A and B. In addition, technical solutions of the embodiments can be combined with each other on the premise that such a combination can be implemented by a person of ordinary skill in the art, and when the combination of the technical solutions is contradictory or impossible to implement, it should be considered that such a combination of the technical solutions does not exist and should fall beyond the protection scope claimed by the invention.

A test referred to in the invention is an in vitro diagnostic test, and refers to a diagnostic method by which a sample (blood, a body fluid, a tissue, etc.) is taken out from the human body and then tested, to determine a disease or a body function. Depending on the test method, it can be biochem analysis, immunoassay, molecular analysis, microbiological analysis, blood analysis, etc. The biochem analysis has a full name of biochemical analysis, and its main test and analysis content includes the qualitative and quantitative analysis of the main substances and metabolites involved in the metabolic process of the body. The immunoassay has a full name of immunological analysis, and its subject matters of test and analysis include the qualitative and quantitative analysis of humoral immune substances involved in immunoreaction, the qualitative and quantitative analysis of various immune cells involved in cellular immunity and the qualitative analysis of cytokines involved in the immunoreaction.

A sample tube contains the sample, and the sample tube is kept fixed in a carrier through a clamping elastic sheet on the carrier. Herein, it should be noted that the carrier can be a sample rack with merely one position for placing the sample test tube, and merely one sample test tube can be conveyed once. The carrier can alternatively be a sample rack for placing a plurality of sample test tubes, and the plurality of sample test tubes can be conveyed once.

In an existing sample test process, after the sample enters a system for conveying the sample, a code is scanned to obtain a test item of the sample, and then a travel path of the sample in a production line is determined according to the test item, so as to guarantee completion of a series of processing procedures on the sample. Generally speaking, the production line includes three assemblies, that is, a pre-processing assembly, an extraction assembly and a post-processing assembly. The pre-processing assembly is used to process a sample prior to testing, including centrifugation, cover uncovering and other actions. The post-processing assembly is used to process a post-tested sample, including film sealing, refrigeration, etc. After obtaining a corresponding sample, the extraction assembly extracts the sample from the sample tube carried by the carrier through a sampling tube, and then subsequent test and analysis are implemented. At the same time, the carrier carrying the extracted sample moves to a next destination through a track, and the production line system marks the sample as a tested sample for a related test item. Generally speaking, at this time, the sample is merely extracted without generation of test and analysis results.

According to the priority, samples entering the production line are divided into ordinary samples to be tested and urgent samples to be tested. Both the ordinary samples to be tested and the urgent samples to be tested are processed according to the above process in the prior art. A difference between the urgent samples to be tested and the ordinary samples to be tested is that the urgent samples to be tested have higher priority, and can jump a queue to enter the extraction assembly, to be extracted, tested and analyzed preferentially. However, the existing queue-jumping is generally achieved by skipping a test of the ordinary sample to be tested, and the ordinary sample to be tested returns to the extraction assembly for the test after a large cycle along a main track of the production line. During such a process, if a new urgent sample to be tested enters the production line, the ordinary sample to be tested needs to be controlled to return to the extraction assembly after a large cycle again, resulting in that the ordinary sample to be tested stays on the main track for a long time. As a result, the test of the ordinary sample to be tested is seriously affected, TAT, that is, the turn-around time, of the ordinary sample to be tested is greatly prolonged, and test efficiency of the entire production line is affected.

In this proposal, the carrier moving in the system for conveying the sample includes at least two types of carriers, that is, a carrier carrying the urgent sample to be tested and a carrier carrying the ordinary sample to be tested. Generally, the system for conveying the sample of the production line can include one or more test items or analyzers, and corresponding test items are completed by each analyzer including the extraction assembly. The analyzers are arranged in inner tracks independent relative to the main track. The sample to be tested mentioned in this proposal refers to a sample that is not extracted by the extraction assembly, and a sample that is extracted by the extraction assembly is a tested sample. The sample to be tested and the tested sample both refer to testing states of a particular analyzer. If a sample needs to undergo a plurality of different test items, each test items has corresponding test states. Further, the urgent sample to be tested and the ordinary sample to be tested mentioned in this proposal mean that in some inner tracks with functional assemblies such as the extraction assemblies, for example, the first inner track with the extraction assembly, extraction priority of the urgent samples to be tested is higher than extraction priority of the ordinary samples to be tested.

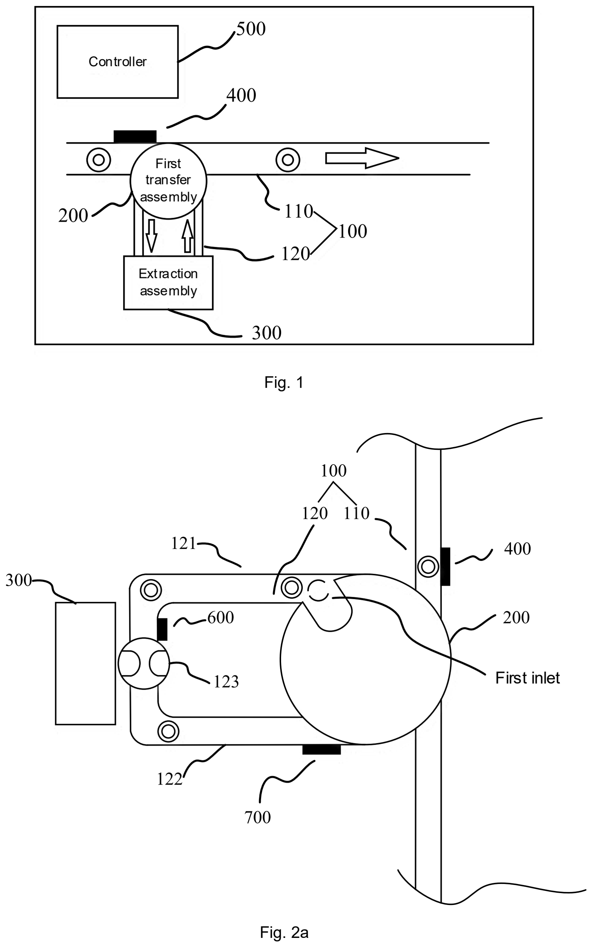

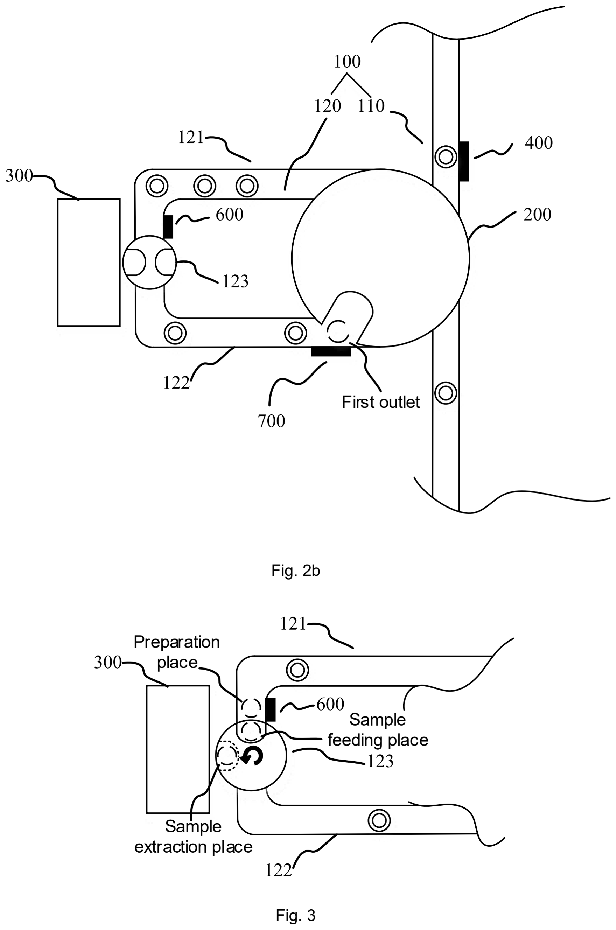

As shown in Fig. 1-Figs. 2a-b, the system for conveying the sample according to the invention includes: a conveying assembly 100 specifically including a main track 110 and a first inner track 120 in communication with the main track 110. A carrier placed on a belt track is further driven to move in the same direction by controlling the belt track contained to move in a designated direction (clockwise or counterclockwise). Since the tracks of the main track 110 and the first inner track 120 are independent of each other, the carriers carried by the main track and the first inner track can independently move cyclically. It should be noted that the main track 110 and the first inner track 120 shown in Fig. 1 are illustrative, and a number of the main tracks 110 and a number of the first inner tracks 120 are not limited to one. In some systems for conveying the sample, a plurality of parallel main tracks **110** are provided, and can convey the carriers on their respective tracks at the same time. Similarly, in some systems for conveying the sample, a plurality of first inner tracks 120 are provided, and can be in communication with the main track **110.** According to a moving direction of the carriers on the first inner track 120, as shown in Fig. 2a, a position of the carrier after being transferred from the main track **110** to the first inner track 120 can be defined as a first inlet of the first inner track 120. Similarly, as shown in Fig. 2b, a position on the first inner track 120 of the carrier when the carrier is transferred from the first inner track 120 to the main track **110** is defined as a first outlet of the first inner track 120. In some embodiments of the system for conveying the sample, the system for conveying the sample can further include a first transfer assembly 200, an extraction assembly 300, a first recognition assembly 400, and a controller 500.

The first transfer assembly 200 is arranged between the main track 110 and the first inner track 120 for communicating the main track and the first inner track. The carrier on the main track 110 can enter the first inner track 120 through the first transfer assembly, and conversely, the carrier on the first inner track 120 can also enter the main track 110 through the first transfer assembly. Further, the first transfer assembly can also make the carriers on the main track 110 and the first inner track 120 cyclically move in respective tracks.

The extraction assembly 300 is arranged at a corresponding place of a sample extraction place of the first inner track 120. When the carrier is carried by the first inner track 120 and moves to the sample extraction place, the extraction assembly extracts and tests the sample carried by the carrier located at the extraction place. It should be noted that the extraction assembly shown in Fig. 1-Figs. 2a-b are merely illustrative and do not limit a number of extraction assemblies. One or more extraction assemblies 300 can be correspondingly arranged at one sample extraction place of the first inner track 120. Further, one or more extraction assemblies 300 can be correspondingly arranged at a plurality of sample extraction places of the first inner track 120. Further, when systems for conveying the sample are provided with a plurality of first inner tracks 120, one or more extraction assemblies 300 can be arranged at the plurality of first inner tracks 120. The extraction assembly 300 is used to extract the sample, and a corresponding assembly obtains an extracted sample and then performs the test and analysis to obtain a test result. For example, a sucked sample and reagent are added into a reaction vessel, and then a mixed solution of the sample and the reagent is tested to obtain the test result.

The first recognition assembly 400 is arranged at a junction of the first transfer assembly 200 and an upstream portion of the main track 110, and is used to recognize a type of the sample carried by the carrier entering the first transfer assembly 200 from the main track 110. The first recognition assembly 400 is used to recognize test information of the carrier passing through a recognition area. For example, the first recognition assembly 400 recognizes number information of the carrier entering a radio frequency area through the radio frequency area of radio-frequency identification (RFID), and the number information is used as an unique identifier of the carrier, and is associated with information of the sample tube carried by the carrier. Further, according to the information of the sample tube, the test information of the sample accommodated in the sample tube can be obtained. The first recognition assembly 400 can alternatively be a scanning device, and the test information of the sample is directly obtained by scanning a label such as a bar code or a two-dimensional code on the sample tube. The test information includes the sample type (the urgent sample to be tested or the ordinary sample to be tested), the test item, a sample test stage (tested or to be tested), patient information, etc.

The controller 500 is a control center of the system for conveying the sample, and is used to manage and control the conveying assembly, the transfer assembly, the extraction assembly, and the recognition assembly in the system for conveying the sample, so as to implement production lined extraction and test of the sample. When the carrier moving on the main track 110 carries the urgent sample to be tested and needs to enter the first inner track 120 to be conveyed to the extraction assembly 300 for the test, the controller 500 controls the first transfer assembly 200 located between the main track 110 and the first inner track 120 to transfer the carrier from the main track 110 to the first inner track 120. At such a current moment, at least some carriers carrying the ordinary samples to be tested on the first inner track 120 are transferred from an upstream track 121 to a downstream track 122, to move towards the first outlet of the first inner track 120 while the ordinary samples on such carriers are not extracted by the extraction assembly 300.

It should be noted that the carrier carrying the ordinary sample to be tested herein is the carrier carrying the ordinary sample to be tested before the sample extraction place, that is, before reaching the sample extraction place. Before the carrier carrying the urgent sample to be tested enters the first inner track 120 for the first time, the carriers are sequentially subjected to the sample extraction operation, and the carriers behind the sample extraction place are all carriers carrying the extracted samples accordingly, that is, there are no carriers carrying the ordinary samples not subjected to the extraction operation behind the sample extraction place. However, in a case there are several carriers carrying the ordinary samples to be tested arranged between carriers carrying the urgent samples that are arranged at intervals on the first inner track 120, when a particular carrier carrying the urgent sample enters the first inner track 120, it is possible that the carrier carrying the ordinary sample is located behind the sample extraction place. In this case, the carrier carrying the ordinary sample to be tested behind the sample extraction place moves towards the first outlet, while the carrier carrying the ordinary sample to be tested before the sample extraction place is not extracted by the extraction assembly 300 and is transferred from the upstream track 121 to the downstream track 122, to move towards the first outlet of the first inner track 120. Thus, in either of the two cases, in this solution, the carriers carrying the ordinary samples to be tested in "at least part of original carriers carrying the ordinary samples to be tested on the first inner track are conveyed to the first outlet" are the carriers carrying the ordinary samples to be tested before the sample extraction place, that is, before reaching the sample extraction place.

Further, when the carriers carrying the ordinary samples to be tested reach the first outlet, the carriers are moved out of the first outlet one by one and then moved into the first inlet through the first transfer assembly 200, and then re-enter the first inner track 120. Specifically, a junction between the first transfer assembly 200 and the first inner track 120 is provided with the first outlet and the first inlet. The first outlet is used to cause the carrier moving in the first inner track 120 to move, after reaching the first outlet, into the first inlet to re-enter the first inner track 120 or leave the first inner track 120 to enter the main track 110. The first inlet is used for the carrier to enter the first inner track 120 through the first inlet, and the carrier can be the carrier moving on the main track 110 or the carrier leaving the first inner track 120 through the first outlet. In combination with the foregoing text, the first transfer assembly 200 transfers the carrier carrying the urgent sample to be tested on the main track 110 to the first inner track 120 through the first inlet, and synchronously moves at least part of carriers carrying the ordinary samples, before reaching the sample extraction place, on the first inner track 120 to the first outlet. Then, the carriers carrying the ordinary samples move from the first outlet to the first inlet through the first transfer assembly 200, to return to the first inner track 120. That is, in a track moving direction of the first inner track 120, at least part of the carriers carrying the ordinary samples to be tested that are originally arranged in front of the carrier carrying the urgent sample to be tested are transferred through the first transfer assembly 200, and the carriers carrying the ordinary samples to be tested are ranked behind the carrier carrying the urgent sample to be tested. Then, the extraction assembly 300 sequentially extracts the samples according to current arrangement order of the carriers, such that the urgent sample to be tested carried in the carrier later entering the first inner track 120 can be extracted by the extraction assembly 300 before the ordinary samples to be tested carried in the carriers that have already entered the first inner track 120.

Through coordinated scheduling of the assemblies and the controller in the above system, when the urgent sample to be tested needs to enter the inner track and be preferentially extracted by the extraction assembly, positional order of the carrier carrying the ordinary sample to be tested and the carrier carrying the urgent sample to be tested can be adjusted according to a running condition of the carriers on the inner track at a current moment, such that the urgent sample to be tested can be extracted and tested before the ordinary sample to be tested, and the ordinary sample to be tested that suffers queue jumping can also continue moving in the inner track. After the urgent sample to be tested is extracted, the ordinary sample to be tested can enter the sample extraction place through the inner track in time to be extracted by the extraction assembly. Preferential processing of the urgent sample to be tested and normal extraction and testing of the ordinary sample to be tested are balanced, and running efficiency of the entire conveying system is prevented from being affected by excessive sacrifice of the ordinary sample to be tested.

In an embodiment, the system for conveying the sample further includes: a second transfer assembly, wherein the second transfer assembly is arranged on the first inner track and is used to transfer the carrier to the sample extraction place, a track from the first inlet to the second transfer assembly is an upstream track of the first inner track, and a track from the second transfer assembly to the first outlet is a downstream track of the first inner track; and a detection assembly, wherein the detection assembly is arranged at an inlet of the second transfer assembly on the first inner track and is used to detect a target carrier, and the target carrier is a carrier reaching a detection area of the detection assembly. The controller is used to control the extraction assembly to execute a sample extraction operation on a sample to be tested carried by the target carrier and then control the second transfer assembly to convey the carrier carrying the ordinary sample to be tested behind the target carrier on the first inner track to the downstream track after the carrier carrying the urgent sample to be tested enters the first inner track.

With reference to Fig. 2a-Fig. 2b, the second transfer assembly 123 is arranged on the first inner track 120, and the detection assembly 600 is arranged at the inlet from which the carrier enters the second transfer assembly 123. When the carrier reaches the detection area of the detection assembly 600, the carrier can be detected by the detection assembly 600. The second transfer assembly 123 and the first transfer assembly 200 divide the first inner track 120 into the upstream track 121 and the downstream track 122. After the carrier reaches the first inlet of the first inner track 120 from the first transfer assembly 200, the carrier enters the second transfer assembly 123 through the upstream track 121. After the carrier is rotatably conveyed to the sample extraction place by the second transfer assembly 123, the extraction assembly 300 extracts the sample carried by the carrier for the test and analysis, and the second transfer assembly 123 transfers the carrier carrying the extracted sample to the downstream track 122. The carrier is conveyed to the first transfer assembly 200 through this track, and is transferred to the main track 110 through the first transfer assembly 200, thus completing cyclical movement of the carrier in the first inner track 120. In another scheduling scenario, the second transfer assembly 123 can also directly transfer the carrier entering the second transfer assembly 123 to the downstream track 122, and the sample carried by this carrier is not extracted by the extraction assembly 300.

In an application scenario, when the carrier carrying the urgent sample to be tested enters the upstream track 121 through the first transfer assembly 200, the controller 500 obtains the information of the carrier detected by the detection assembly 600 at the current moment according to the detection information sent by the detection assembly 600, marks the detected carrier as the target carrier, and sequentially controls the second transfer assembly 123 to transfer the target carriers to the sample extraction place successively according to the test sequential order of the target carriers, causing the samples carried by the target carriers to be extracted sequentially by the extraction assembly 300. After the extractions on the target carriers are completed and before the detection assembly 600 recognizes the carrier carrying the urgent sample to be tested, if the detection assembly 600 recognizes the carrier carrying the ordinary sample to be tested, the controller sends an instruction not to extract the sample carried by the carrier carrying the ordinary sample to be tested to the extraction assembly 300. After receiving the instruction, the extraction assembly 300 does not extract the sample carried by the carrier carrying the ordinary sample to be tested that reaches the sample extraction place through the second transfer assembly 123. Further, the controller sends a transfer instruction to the second transfer assembly 123, and the second transfer assembly 123 transfers the carrier carrying the ordinary sample to be tested at the sample extraction place to the downstream track according to the instruction. If a next carrier passing through the detection assembly 600 is still the carrier carrying the ordinary sample to be tested, the above steps are repeated until the detection assembly 600 recognizes the carrier carrying the urgent sample to be tested. After the extraction assembly 300 executes the extraction operation on the sample carried by the carrier carrying the urgent sample to be tested that reaches the sample extraction place through the second transfer assembly 123, the carrier carrying the urgent sample to be tested is then transferred from the sample extraction place to the downstream track through the second transfer assembly 123. In an embodiment, the detection assembly 600 is arranged in the upstream track next to the second transfer assembly 123, such that a number of carriers carrying the samples to be tested detected by the detection assembly 600 does not exceed one, that is, a number of target carriers does not exceed one. Merely after a first carrier carrying the sample to be tested is detected by the detection assembly 600, and reaches the sample extraction place through the second transfer assembly 123 and is extracted, will the next carrier have the space to advance along the upstream track 121 and reach the detection area of the detection assembly 600, to be recognized by the detection assembly 600, and be marked as the target carrier by the controller 500. Through this solution, a time period during which the urgent sample enters the inner track, and reaches the sample extraction place and is extracted can be fully utilized, and the target carrier is subjected to extraction within the time period, thus balancing extraction efficiency of the ordinary sample to be tested and extraction efficiency of the urgent sample to be tested. Further, by arranging the detection assembly 600 upstream of the sample extraction place, the target carrier is recognized in advance and then the detection information is sent to the controller 500, and then an instruction to prepare extraction is sent to the extraction assembly 300. In this way, the extraction assembly 300 has already started to prepare extraction execution before the target carrier reaches the sample extraction place, thus improving the extraction efficiency of the target carrier.

In another application scenario, when the carrier carrying the urgent sample to be tested enters the upstream track 121 through the first transfer assembly 200, if there is no carrier detected by the detection assembly 600 at this current moment, that is, there is no target carrier, both the second transfer assembly 123 and the extraction assembly 300 remain in a standby state until a carrier is detected by the detection assembly 600 and enters the second transfer assembly 123. If the carrier is the carrier carrying the ordinary sample to be tested, the controller sends an instruction not to extract the sample carried by the carrier carrying the ordinary sample to be tested to the extraction assembly 300. After receiving the instruction, the extraction assembly 300 does not extract the sample carried by the carrier carrying the ordinary sample to be tested that reaches the sample extraction place through the second transfer assembly 123. Further, the controller sends a transfer instruction to the second transfer assembly 123, and the second transfer assembly 123 transfers the carrier carrying the ordinary sample to be tested to the downstream track according to the instruction. If a next carrier passing through the detection assembly 600 is still the carrier carrying the ordinary sample to be tested, the above steps are repeated until the detection assembly 600 recognizes the carrier carrying the urgent sample to be tested. After the extraction assembly 300 executes the extraction operation on the sample carried by the carrier carrying the urgent sample to be tested that reaches the sample extraction place through the second transfer assembly 123, the carrier carrying the urgent sample to be tested is transferred from the sample extraction place to the downstream track through the second transfer assembly 123.

According to the technical solution, when the urgent sample to be tested enters the first inner track, for the carrier carrying the ordinary sample to be tested, the controller issues an instruction not to execute the extraction operation to the extraction assembly, and transfers the ordinary sample to be tested to the downstream track of the first inner track through the second transfer assembly, such that the ordinary sample to be tested can be quickly removed when the urgent sample to be tested enters. In addition, if the urgent sample to be tested enters the first inner track, the sample carried by the carrier that is detected by the detection assembly 600 is extracted first, and then the ordinary sample to be tested that reaches later is removed. Through this solution, when the urgent sample to be tested enters, part of samples can be extracted first, thus guaranteeing that part of samples can be extracted normally, while reducing influence on queue-up duration of the urgent sample to be tested that just enters the first inner track, and improving extraction and test efficiency of the entire production line.

In an embodiment, after the second transfer assembly conveys the carrier carrying the ordinary sample to be tested behind the target carrier on the first inner track to the downstream track, the controller is further used to: control the second transfer assembly to transfer the carrier carrying the urgent sample to be tested to the sample extraction place and control the extraction assembly to execute the sample extraction operation on the urgent sample to be tested, and then sequentially execute an extraction operation on the ordinary samples to be tested according to sequential order in which the carriers carrying the ordinary samples to be tested reach the sample extraction place.

In an application scenario, after the controller 500 controls the extraction assembly 300 to sequentially execute the sample extraction operation on the target carrier and the carrier carrying the urgent sample to be tested. That is, when no carrier carrying the urgent sample to be tested is on the upstream track 121, the controller 500 controls the extraction assembly 300 to sequentially extract the samples carried by the carriers according to a default scheduling strategy and according to the sequential order in which the carriers carrying the ordinary samples to be tested reach the sample extraction place.

According to the technical solution, when all the urgent samples to be tested on the first inner track are extracted, a current scheduling strategy is switched timely to the default scheduling strategy of extraction in sequential order. Thus, extraction of the ordinary samples to be tested can be guaranteed to be restored to the normal in time, an extraction process of the ordinary samples can be guaranteed, and influence of queue jumping of the urgent sample on the ordinary sample can be reduced timely.

In an embodiment, the second transfer assembly is provided with at least two sample feeding recesses, the sample feeding recess is used to accommodate the carrier, and an included angle between adjacent sample feeding recesses relative to a rotation center of the second transfer assembly is 90 degrees or 180 degrees.

With reference to Fig. 3, the sample feeding recess is a recess provided on the second transfer assembly 123, a preparation place is arranged on the upstream track, and the place is the detection area of the detection assembly 600. A sample feeding place is arranged in the sample feeding recess provided on the second transfer assembly 123, the place is also a connection port between the sample feeding recess and the upstream track 121, and the sample extraction place is arranged in the sample feeding recess at a corresponding position where the extraction assembly 300 executes the extraction.

When the carrier is conveyed to the preparation place on the upstream track 121 corresponding to the detection assembly 600 through the upstream track 121, the carrier enters the detection area of the detection assembly 600. After being detected by the detection assembly 600, the carrier reaches a sample feeding place through conveying by the upstream track and the sample feeding recess that is provided with an opening. The carrier is further conveyed to the sample extraction place via the sample feeding recess through counterclockwise rotation of the second transfer assembly 123, and the sample carried by the carrier is subjected to the extraction operation by the extraction assembly at the sample extraction place.

In an application scenario, the detection assembly 600 is arranged at a side of the upstream track 121, a detection range of the detection assembly includes an area covering the preparation place on the upstream track 121, and a carrier reaching the preparation place can be detected in real time. In another embodiment, the detection assembly 600 is an optocoupler sensor that is arranged below the preparation place on the upstream track 121, and is used to sense whether a carrier has reached the preparation place. When the detection assembly 600 senses the carrier passing by, a signal is transferred back to the controller. The controller determines the target carrier based on the signal received and arrangement order of the carriers in queue information, and sends an instruction to prepare extraction to the extraction assembly 300. The extraction assembly 300 executes the extraction preparation in advance according to the instruction, and when the carrier in the preparation place reaches the sample extraction place, the extraction assembly that completes the extraction preparation can quickly execute the extraction, thus improving the extraction efficiency. In another embodiment, the detection assembly 600 is an RFID sensor, and is used to directly read information of the carrier and send the information obtained back to the controller 500, and the controller directly marks a corresponding carrier as the target carrier according to the information. In yet another embodiment, the detection assembly 600 is composed of the RFID sensor and an optocoupler sensor. The RFID sensor is arranged downstream of the optocoupler sensor and is used to recognize and obtain the information of the carrier located at the sample feeding place. When the carrier moves downwards from the upstream, the carrier is first recognized by the optocoupler sensor, and then the controller determines the information of the carrier according to the signal sent back by the optocoupler sensor combined with the queue information. Then, the carrier moves to the sample feeding place and is recognized by the RFID sensor, and the information of the carrier is obtained. The controller compares whether the two pieces of information are consistent, and marks the carrier as the target carrier when they are consistent.

In an application scenario, when the carrier carrying the urgent sample to be tested enters the upstream track 121 of the first inner track 120 through the first transfer assembly 200, if at a current moment, when at least one carrier is located in either of the preparation place or the sample feeding place, that is, the carrier is detected by the detection assembly 600, the controller marks the carrier as the target carrier and sends an instruction to execute extraction preparation to the extraction assembly 300. When the target carrier is located at the extraction place, the controller sends an instruction to execute the extraction to the extraction assembly 300. Alternatively, when the carrier is located at the sample extraction place, the controller sends an instruction to execute the extraction to the extraction assembly 300. After the extraction assembly 300 extracts the sample carried by the target carrier detected by the detection assembly 600, if a subsequent carrier carrying the ordinary sample to be tested is located at any place of the preparation place, the sample feeding place and the sample extraction place, the controller does not send an instruction to prepare the extraction or an instruction to execute the extraction to the extraction assembly 300, and the carrier carrying the ordinary sample to be tested is skipped. Until the sample carried by the carrier carrying the urgent sample to be tested that is located on the upstream track 121 is extracted by the extraction assembly 300 and no other carriers carrying the urgent samples to be tested are conveyed on the upstream track 121, the extraction assembly 300 sequentially executes the extraction preparation and the extraction on the carriers according to the sequential order in which the carriers reach the preparation place, the sample feeding place and the sample extraction place, so as to sequentially extract the samples carried.

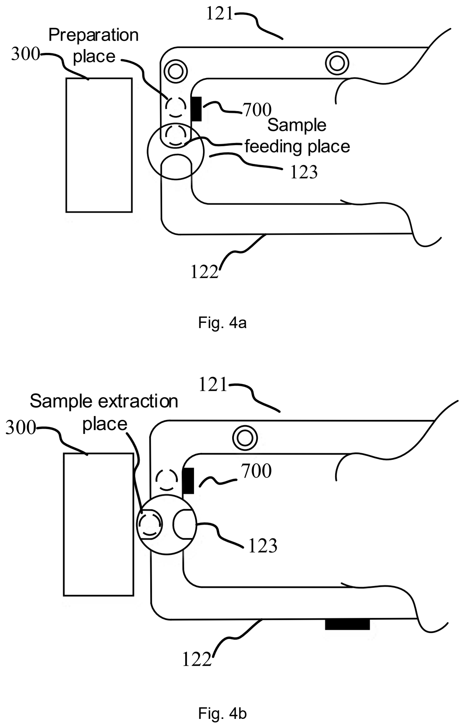

In an application scenario, the second transfer assembly 123 is a disk structure that can rotate counterclockwise or clockwise around a circle center of the second transfer assembly. In a specific embodiment, with reference to Fig. 4a-Fig. 4b, the second transfer assembly 123 is provided with two symmetrical sample feeding recesses, and an included angle between the two sample feeding recesses relative to a rotation center of the second transfer assembly 123 is 180 degrees. A stroke of each rotation of the second transfer assembly 123 is one quarter of a circle, that is, the second transfer assembly 123 rotates 90 degrees counterclockwise around the circle center each time. At least one sample feeding recess is located at the sample feeding place or the sample extraction place every time the second transfer assembly 123 rotates 90 degrees. That is, when the carrier enters the sample feeding recess from the upstream track 121, and reaches the sample feeding place in other words, the second transfer assembly 123 rotates 90 degrees counterclockwise around the circle center, to transfer the carrier located at the sample feeding place to the sample extraction place. The extraction assembly 300 executes the extraction operation on the sample carried by the carrier located at the sample extraction place. After the extraction, the second transfer assembly 123 rotates 90 degrees counterclockwise around the circle center again, and docks with the downstream track 122 through the sample feeding recess, to transfer the carrier with the extracted sample to the downstream track 122. In addition, the other sample feeding recess symmetrical to the sample feeding recess docks with the upstream track 121, to receive a next carrier conveyed from the preparation place to the sample feeding place. Thus, while the carrier with the sample extracted leaves the sample feeding recess, the carrier at the preparation place enters the sample feeding place, and then the carrier is transferred to the sample extraction place through rotation of the second transfer assembly 123. Each rotation of the second transfer assembly 123 can make the carrier reach the sample extraction place from the sample feeding place or make the carrier smoothly enter the sample feeding place from the preparation place through the upstream track 121. Thus, fixed and stable movement is implemented from the preparation place of the upstream track 121 to the sample extraction place through the sample feeding place. In the structure, two carriers can be located at the preparation place, the sample feeding place and the sample extraction place at the same time, that is, the two carriers can be located at the preparation place, the sample feeding place or the sample extraction place separately.

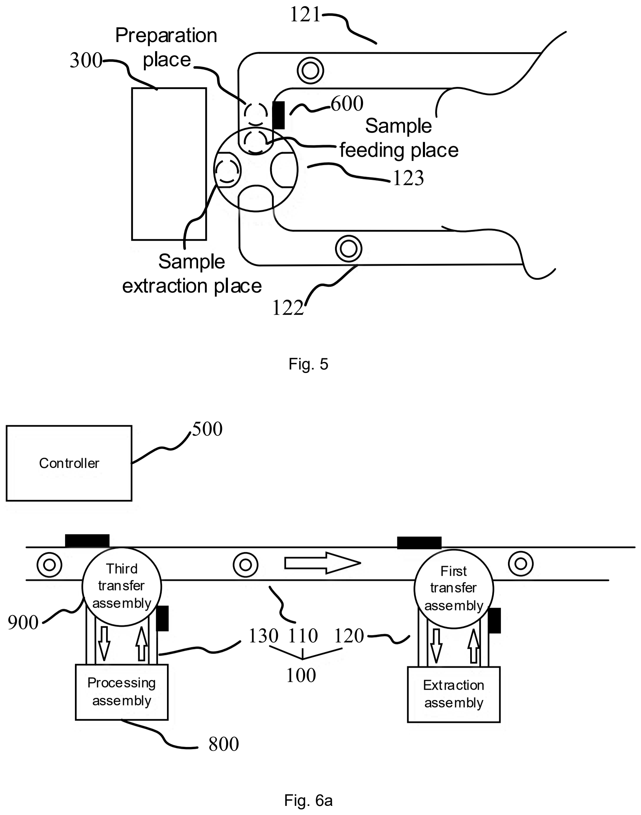

In another application scenario, the second transfer assembly 123 is a disk structure that can rotate counterclockwise or clockwise around a circle center of the second transfer assembly. In a specific embodiment, with reference to Fig. 5, the second transfer assembly 123 is provided with four sample feeding recesses that are symmetrical in pairs, the four sample feeding recesses are arranged in a cross shape, and an included angle between adjacent sample feeding recesses relative to a rotation center of the second transfer assembly 123 is 90 degrees. When the carrier enters the sample feeding recess from the upstream track 121, that is, the carrier reaches the sample feeding place, the second transfer assembly 123 rotates 90 degrees counterclockwise around the circle center, and transfers the carrier located at the sample feeding place to the sample extraction place. In addition, the other adjacent sample feeding recess just moves to a docking place with the upstream track 121, receives the next carrier conveyed from the preparation place to the sample feeding place, and makes the carrier enter the sample feeding place. The extraction assembly 300 executes the extraction operation on the sample carried by the carrier located at the sample extraction place. After the extraction, the second transfer assembly 123 rotates 90 degrees counterclockwise around the circle center again, and transfers the carrier with the extracted sample to the downstream track 122 through the sample feeding recess. In addition, the other sample feeding recess adjacent to the sample feeding recess transfers the carrier at the sample feeding place to the sample extraction place for the extraction assembly 300 to execute the extraction operation. Each rotation of the second transfer assembly 123 can make the carrier reach the sample extraction place from the sample feeding place, make the carrier smoothly enter the sample feeding place from the preparation place through the upstream track 121 and make the carrier at the sample extraction place enter the downstream track 122. Thus, fixed and stable movement is implemented from the preparation place of the upstream track 121 to the sample extraction place through the sample feeding place. In the structure, three carriers can be separately located at the preparation place, the sample feeding place and the sample extraction place at the same time.

In the technical solution, after the carrier is detected by the detection assembly 600, the controller marks the carrier as the target carrier, and controls the extraction assembly to make extraction preparation for the detected carrier in advance. In this case, the carriers at the preparation place, the sample feeding place and the sample extraction place are all detected by the detection assembly 600 and marked as the target carriers. When the urgent sample enters the inner track, the samples carried by the target carriers at the preparation place, the sample feeding place and the sample extraction place are preferentially extracted, and then a subsequent ordinary sample is skipped and not extracted. The extraction efficiency is improved, the preferential treatment of the urgent samples can be guaranteed, and part of ordinary samples can be processed in time to a certain extent. Secondly, a plurality of adjacent sample feeding recesses are provided on the second transfer assembly, and by rotating the second transfer assembly around the center, the carriers conveyed by the upstream track are transferred to the sample extraction place through the sample feeding place in turn. Due to the symmetrical arrangement of the sample feeding recesses, the second transfer assembly can stably transfer the carriers from the sample feeding place to the sample extraction place merely by rotating a fixed angle, and transfer the next carrier carrying the sample to be extracted in time when the carrier is transferred out after the extraction is completed. Thus, work logic of the second transfer assembly is simplified, and transfer efficiency is further improved.

In an embodiment, the controller is further used to control the first transfer assembly to transfer the carrier carrying the ordinary sample to be tested to the upstream track when a remaining temporary storage number of the first inner track is greater than a preset reserved number and the first recognition assembly recognizes the carrier carrying the ordinary sample to be tested. The remaining temporary storage number equals a difference between a total number of the carriers carrying the urgent samples to be tested and the carriers carrying the ordinary samples to be tested that are accommodable on the first inner track and a total number of the carriers carrying the urgent samples to be tested and the carriers carrying the ordinary samples to be tested that are currently accommodated.

In an embodiment, the controller is further used to control the first transfer assembly to transfer the carrier carrying the ordinary sample to be tested from the first outlet to the main track when the remaining temporary storage number of the first inner track is less than or equal to the preset reserved number and the carrier carrying the ordinary sample to be tested reaches the first outlet, and to control the first transfer assembly to transfer the carrier carrying the ordinary sample to be tested to the main track when the remaining temporary storage number of the first inner track is less than or equal to the preset reserved number and the first recognition assembly recognizes the carrier carrying the ordinary sample to be tested.

A total temporary storage number is a maximum number of carriers that can be temporarily stored by the upstream track 121 of the first inner track 120. In this application scenario, the total temporary storage number refers to a maximum number of carriers carrying the urgent samples to be tested plus carriers carrying the ordinary samples to be tested that can be simultaneously carried by the upstream track 121.

The preset reserved number refers to a number of temporary storage places reserved in advance for the carriers carrying the urgent samples to be tested on the first inner track. Specifically, when the remaining temporary storage number of the first inner track is less than or equal to the preset reserved number, the carriers carrying the ordinary samples to be tested cannot enter the first inner track, and when the remaining temporary storage number of the first inner track is greater than the preset reserved number, the carriers carrying the ordinary samples to be tested can normally enter the first inner track. Thus, the first inner track is guaranteed to have free temporary storage places to accommodate the carriers carrying the urgent samples to be tested under any condition. The preset reserved number can be customized by adding relevant rules in the execution logic inside the controller.

In an application scenario, when each carrier enters the upstream track 121 of the first inner track 120 through the first transfer assembly 200, the controller increases the current number of carriers of the upstream track 121 by 1 according to the carrier information recognized by the first recognition assembly 400, and synchronously records the type of the carrier (the carrier carrying the urgent sample to be tested or the carrier carrying the ordinary sample to be tested). Based on the information, a conveying queue of the upstream track 121 is generated, and the queue information includes queue sequential order of the carriers, the type of samples carried by the carriers, a total number of carriers in the queue, and numbers of carriers carrying the urgent samples to be tested and carriers carrying the ordinary samples to be tested. When one carrier reaches the sample extraction place through the detection assembly 600, and the sample carried by such a carrier is extracted by the extraction assembly 300 and the carrier is transferred to the downstream track 122 through the second transfer assembly 123, the current number of carriers of the upstream track 121 is decreased by 1, and the type of the carrier (the carrier carrying the urgent sample to be tested or the carrier carrying ordinary sample to be tested) is determined synchronously, that is, the carrier is moved out of the conveying queue of the upstream track 121. By repeating the above steps, whenever carriers enter and leave the upstream track 121, the controller can grasp the current number of carriers being conveyed on the upstream track 121 and the sequential order in the queue, as well as conveying numbers of carriers carrying urgent samples to be tested and carriers carrying ordinary samples to be tested in real time.

In a specific embodiment, the maximum number of carriers that can be temporarily stored by the upstream track 121 is 5, and the preset reserved number is set as 2, that is, the minimum number of carriers carrying the urgent samples to be tested that can be carried on the upstream track 121 is 2. After the type of sample carried by the carrier conveyed from the main track 110 is recognized by the first recognition assembly 400 and the carrier is sent to the upstream track 121 of the first inner track 120 through the first transfer assembly 200, the current number of carriers temporarily stored by the upstream track 121 and the temporary storage numbers of carriers carrying the urgent samples to be tested and carriers carrying the ordinary samples to be tested are recorded in real time. With reference to Fig. 2a, when the first recognition assembly 400 recognizes the carrier carrying the ordinary sample to be tested that needs to enter the first inner track 120 at a particular moment, the number of carriers being temporarily stored by the upstream track 121 at this moment is 2, that is, the remaining temporary storage number of the carriers of the upstream track 121 at the current moment is the maximum number of carriers minus the number of carriers currently temporarily stored, that is, the number of carriers capable of being further received is 5-2=3s. In this case, the remaining temporary storage number of 3 is greater than the preset reserve number of 2, then the controller controls the first transfer assembly 200 to transfer the carrier carrying the ordinary sample to the upstream track 121. In another application scenario, the carrier carrying the ordinary sample to be tested needs to re-enter the upstream track 121. According to the above scheduling rule, the carrier carrying the ordinary sample to be tested is transferred to the first inlet to enter the upstream track 121. For the carrier carrying the urgent sample to be tested that needs to be sent from the main track 110 to the upstream track 121, it is not restricted by the rule as long as the remaining temporary storage number of the upstream track 121 does not equal zero. The controller transfers each carrier carrying the urgent sample to be tested that needs to enter the upstream track 121 to the first inlet through the first transfer assembly 200 to enter the upstream track 121.

In another specific embodiment, the maximum number of carriers that can be temporarily stored by the upstream track 121 is 5, and the preset reserved number is set as 2, that is, the minimum number of carriers carrying the urgent samples to be tested that can be carried on the upstream track 121 is 2. After the type of the carrier conveyed from the main track 110 is recognized by the first recognition assembly 400 and the carrier is sent to the upstream track 121 of the first inner track 120 through the first transfer assembly 200, the current number of carriers temporarily stored by the upstream track 121 and the temporary storage numbers of carriers carrying the urgent samples to be tested and carriers carrying the ordinary samples to be tested are recorded in real time. When the first recognition assembly 400 recognizes the carrier carrying the ordinary sample to be tested that needs to enter the first inner track 120 or the carrier carrying the ordinary sample to be tested that needs to re-enter the upstream track 121 at a particular moment, with reference to Fig. 2b, the number of carriers being temporarily stored by the upstream track 121 is 3, that is, the remaining temporary storage number of the carriers of the upstream track 121 at the current moment is the maximum number of carriers minus the number of carriers currently temporarily stored, that is, the number of carriers capable of being further received is 5-3=2. In this case, the remaining temporary storage number of 2 is equal to the preset reserved number of 2, then the controller controls the first transfer assembly 200 to transfer the carrier carrying the ordinary sample to be tested from the upstream of the main track 110 relative to the first transfer assembly 200 to the downstream of the main track 110 relative to the first transfer assembly 200. Thus, the carrier carrying the ordinary sample to be tested continues moving on the main track 110, and does not enter the first inner track 120 when the carrier is recognized by the first recognition assembly 400 until the first recognition assembly 400 recognizes the carrier carrying the ordinary sample to be tested again. Then, the controller schedules the carrier carrying the ordinary sample to be tested according to the above rule. Similarly, for the carrier carrying the ordinary sample to be tested that needs to re-enter the upstream track 121 from the downstream track 122 of the first inner track 120, the controller transfers the carrier carrying the ordinary sample to be tested from the first outlet to the downstream of the main track 110 relative to the first transfer assembly 200, such that the carrier carrying the ordinary sample to be tested does not enter the upstream track 121 until the first recognition assembly 400 recognizes the carrier carrying the ordinary sample to be tested again, and then the controller schedules the carrier carrying the ordinary sample to be tested according to the above rule. In this way, it is guaranteed that the upstream track 121 can temporarily store at least two carriers carrying the urgent samples to be tested at the same time in any case.

According to the technical solution, when the upstream track 121 is full of temporarily stored carriers, at least a particular number of carriers carrying the urgent samples to be tested can be temporarily stored. In addition, by setting the scheduling rule limiting an object to the carrier carrying the ordinary sample to be tested, each carrier carrying the urgent sample to be tested can be sent to the first inner track in any case according to different preset reserved numbers, so as to ensure that the urgent samples can be processed in time.

In an embodiment, the system for conveying the sample further includes: a second recognition assembly. The second recognition assembly is arranged at the first outlet and is used to recognize the sample type of the sample carried by the carrier reaching the first outlet. When the carrier carrying the ordinary sample to be tested reaches the first outlet and the second recognition assembly recognizes an untested ordinary sample to be tested, the controller controls the first transfer assembly to transfer the carrier carrying the untested ordinary sample to be tested from the first outlet to the first inlet to enter the first inner track.

With reference to Fig. 2a-Fig. 2b, the second recognition assembly 700 is arranged near the first outlet, and is used to test the type of the sample carried by the carrier reaching the first outlet. Reference can be made to the description of the first recognition assembly 400 for a specific implementation, which will not be repeated herein.

In a specific application scenario, when the carrier carrying the ordinary sample to be tested reaches the first outlet and is recognized by the second recognition assembly 700, the second recognition assembly 700 sends the recognized information to the controller 500. The controller 500 controls the first transfer assembly 200 to transfer the carrier carrying the untested ordinary sample to be tested from the first outlet to the first inlet to enter the first inner track.

In another specific application scenario, when the carrier entering the downstream track through the second transfer assembly 123 is recognized by the second recognition assembly, if the first recognition assembly 400 recognizes the carrier that needs to enter the inner track 120 from the main track 110 in the adjacent time, the controller controls the first transfer assembly 200 to transfer the carriers onto the upstream track 121 of the first inner track 120 successively in sequential order in which the carriers are recognized by the recognition assemblies according to the sequential order of the carriers recognized by the two recognition assemblies, that is the first recognition assembly 400 and the second recognition assembly 700. For example, when the carrier carrying the ordinary sample to be tested sent to the first transfer assembly 200 is conveyed on the downstream track 122, and the carrier carrying the urgent sample to be tested or the carrier carrying the ordinary sample to be tested that needs to enter the first inner track 120 is also conveyed on the main track 110, if the second recognition assembly 700 first recognizes the carrier carrying the ordinary sample to be tested, and then the first recognition assembly 400 recognizes the carrier carrying the urgent sample to be tested or the carrier carrying the ordinary sample to be tested, the first transfer assembly first transfers the carrier carrying the ordinary sample to be tested from the first outlet of the downstream track 122 to the first inlet of the upstream track 121, and then transfers the carrier carrying the urgent sample to be tested or the carrier carrying the ordinary sample to be tested that is conveyed by the main track 110 and recognized by the first recognition assembly 400 to the first inlet of the upstream track 121. On the other hand, if the first recognition assembly 400 first recognizes the carrier carrying the urgent sample to be tested or the carrier carrying the ordinary sample to be tested on the main track 110, the first transfer assembly 200 is controlled to transfer the carrier carrying the urgent sample to be tested or the carrier carrying the ordinary sample to be tested on the main track 110 to the first inlet of the upstream track 121 of the first inner track 120, and then the carrier carrying the ordinary sample to be tested that is located at the downstream track 122 is transferred to the upstream track 121 according to the fact that the second recognition assembly 700 recognizes the carrier carrying the ordinary sample to be tested at the first outlet.

In an embodiment, the conveying assembly further includes a second inner track, the main track and the second inner track are in communication through a third transfer assembly. The system further includes a processing assembly connected with the second inner track and used to process a sample prior to testing. The controller is further used to control the third transfer assembly to transfer the carrier carrying the urgent sample to be tested from the main track to the second inner track, determine arrangement order of the carrier carrying the urgent sample to be tested and the carrier carrying the ordinary sample to be tested on the second inner track, and cause the processing assembly to sequentially process the urgent sample to be tested and the ordinary sample to be tested.

In the computer equipment for sample conveying, a plurality of processing steps are included, and are pre-processing, extraction and post-processing in turn according to the sequential order of sample processing. The pre-processing includes pre-processing works such as centrifugation, cover uncovering, etc. on the sample to be extracted. The extraction refers to extracting the sample to be extracted. The post-processing includes processing works such as film sealing, refrigeration, etc. on the extracted sample. The centrifugation of the pre-processing can process a plurality of samples in batches, the cover uncovering is simple in process and short in operation time. In the tested samples targeted by the post-processing, the urgent sample is extracted. Thus, it is less necessary to schedule the urgent sample preferentially in the workflow of the pre-processing and the post-processing.

With reference to Fig. 6a, when the processing assembly 800 is a pre-processing assembly, the processing assembly 800 is used to execute pre-processing work. After the carriers carrying the samples to be tested are sent from the main track 110 to the third transfer assembly 900, the carriers are sequentially transferred, through the third transfer assembly 900, to the second inner track 130 connected with the processing assembly 800, and the sequential order of the carriers conveyed on the second inner track 130 is confirmed. The processing assembly 800 executes the pre-processing work on the carriers sequentially in this order, then the carriers are sent back to the main track 110 through the second inner track 130 and the third transfer assembly 900 one by one, and are sent to the first transfer assembly located downstream of the main track 110 according to an arrow direction.

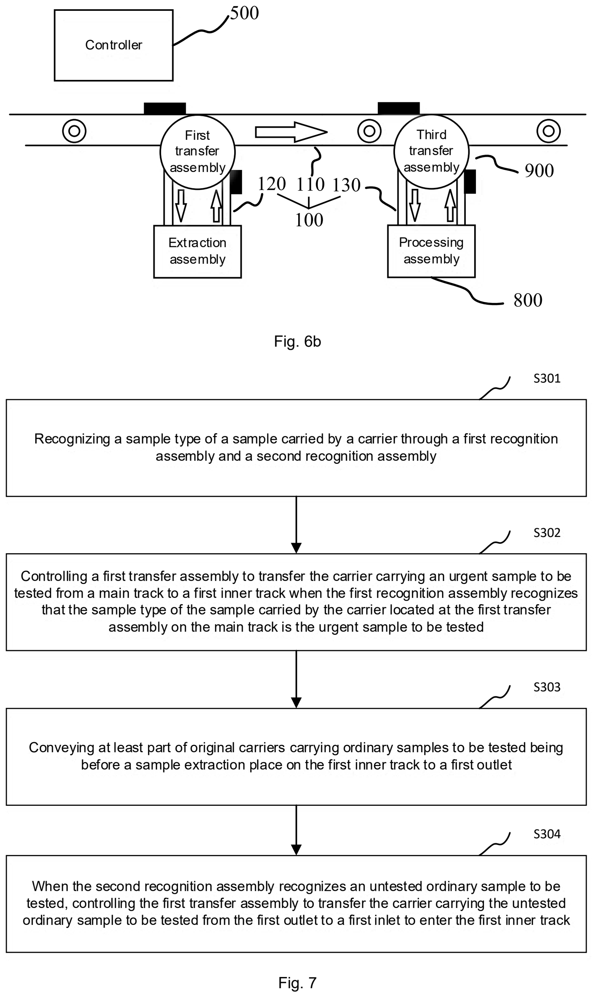

With reference to Fig. 6b, when the processing assembly 800 is a post-processing assembly, the processing assembly 800 is used to execute post-processing work. In this case, the third transfer assembly 900 located downstream of the main track 110 receives the carriers conveyed from the upstream, the carriers are sequentially transferred, through the third transfer assembly 900, to the second inner track 130 connected with the processing assembly 800, and the sequential order of the carriers conveyed on the second inner track 130 is confirmed. The processing assembly 800 executes the post-processing work on the carriers sequentially in this order, and then the carriers are sent back to the main track 110 through the second inner track 130 and the third transfer assembly 900 one by one.

In another application scenario, the urgent sample to be tested or the ordinary sample to be tested after being extracted by the extraction assembly 300 needs to be conveyed to the main track 110 by the carrier from the downstream track 122, to enter other processing assemblies 800 for being processed. For example, a film coating assembly coats the extracted sample. When the carrier carrying such a sample reaches the second recognition assembly 700, if before the carrier is recognized by the second recognition assembly 700, the first recognition assembly 400 has already recognized the carrier moving on the main track 110 that needs to enter the first inner track 120 through the first transfer assembly 200, or the carrier that needs to continue moving on the main track through the first transfer assembly 200, the first transfer assembly 200 is controlled to transfer the carrier recognized by the first recognition assembly 400 to the first inner track 120 or the downstream of the main track 110, and then transfer the carrier carrying the extracted sample from the downstream track 122 to the downstream of the main track 110.

In a specific application scenario, a plurality of transfer assemblies are arranged on the main track 110, and a plurality of inner tracks are in communication with the main track 110 through corresponding transfer assemblies. An analyzer including the extraction assembly is arranged on each inner track, and each analyzer can execute the same or different test items. In a usage scenario, when the production line system is equipped with a plurality of analyzers that execute the same test items and are in communication with the main track respectively through corresponding inner tracks, if one analyzer is executing sample extraction and test on the carrier, other carriers conveyed from the main track can enter another inner track to be subjected to the same test item. In another application scenario, when the production line system is equipped with a plurality of analyzers that execute different test items and are in communication with the main track respectively through corresponding inner tracks, if a particular carrier enters the inner track with a biochemical test item first and is subjected to the biochemical test item by a corresponding analyzer, a test state of the carrier on the inner track is changed to tested. In this case, the carrier also needs to enter the inner track of an immune test item, a test state of the carrier relative to the inner track is to be tested, and the state of the carrier on the inner track is tested until the carrier enters the inner track of the immune test item and is subjected to the immune test item by a corresponding analyzer.

According to the above technical solution, by setting a unified scheduling solution for the carrier types on a corresponding inner track loop for other processing assemblies whose functions are different from a function of the extraction assembly, the processing of the ordinary samples can be guaranteed without affecting the preferential processing of the urgent sample, and the processing efficiency of the entire production line and the utilization rate of the functional assemblies are further improved.

Based on the same inventive concept, the embodiment of the invention further provides a method for conveying a sample for implementing the system for conveying the sample. A implementation solution to the problem provided by the method is similar to a solution in the system described above, and reference can be made to the limitation to the system for conveying the sample in the text described above for specific limitation to one or more embodiments of the method for conveying the sample provided below, which will not be repeated herein.

In an embodiment, as shown in Fig. 7, the method for conveying the sample is provided. The method includes:
a first recognition assembly and a second recognition assembly recognize a sample type of a sample carried by a carrier. The sample type includes an urgent sample to be tested and an ordinary sample to be tested. The first recognition assembly is arranged at a connection port of a first transfer assembly with a main track and a first inner track, the main track and the first inner track are used to drive the carrier to move independently and circularly in a designated direction, and the main track and the first inner track are in communication through the first transfer assembly to allow the carrier to move between the main track and the first inner track. The first inner track has a sample extraction place, and a first inlet and a first outlet that are in communication with the first transfer assembly, the sample extraction place is located between the first inlet and the first outlet, and the second recognition assembly is arranged at the first outlet;
the first transfer assembly is controlled to transfer the carrier carrying the urgent sample to be tested from the main track to the first inner track when the first recognition assembly recognizes that the sample type of the sample carried by the carrier located at the first transfer assembly on the main track is the urgent sample to be tested; and
at least part of original carriers carrying the ordinary samples to be tested on the first inner track are conveyed to the first outlet; and the first transfer assembly is controlled to transfer the carrier carrying an untested ordinary sample to be tested from the first outlet to the first inlet to enter the first inner track when the original carrier carrying the ordinary sample to be tested reaches the first outlet.

According to the above method for conveying the sample, when the urgent sample to be tested needs to enter the first inner track and be preferentially extracted by the extraction assembly, positional order of the carrier carrying the ordinary sample to be tested and the carrier carrying the urgent sample to be tested can be adjusted according to a running condition of the carriers on the first inner track at a current moment, such that the urgent sample to be tested can be extracted and tested before the ordinary sample to be tested, and the ordinary sample to be tested that suffers queue jumping can also continue moving on the first inner track. After the urgent sample to be tested is extracted, the ordinary sample to be tested can enter the sample extraction place through the first inner track quickly to be extracted by the extraction assembly in time. Preferential processing of the urgent sample to be tested and normal extraction and testing of the ordinary sample to be tested are balanced, and running efficiency of the entire conveying system is prevented from being affected by excessive sacrifice of the ordinary sample to be tested.

In an embodiment, the method for conveying the sample further includes: after the carrier carrying the urgent sample to be tested enters the first inner track, the extraction assembly is controlled to execute a sample extraction operation on a sample to be tested carried by a target carrier and then the second transfer assembly is controlled to convey the carrier carrying the ordinary sample to be tested behind the target carrier on the first inner track to the downstream track. A second transfer assembly is arranged on the first inner track and is used to transfer the carrier to the sample extraction place, a track from the first inlet to the second transfer assembly is an upstream track of the first inner track, and a track from the second transfer assembly to the first outlet is a downstream track of the first inner track. A detection assembly is arranged at an inlet of the second transfer assembly on the first inner track and is used to detect the target carrier, and the target carrier is a carrier reaching a detection area of the detection assembly.

In an embodiment, after the second transfer assembly conveys the carrier carrying the ordinary sample to be tested behind the target carrier on the first inner track to the downstream track, the method further includes: the second transfer assembly is controlled to transfer the carrier carrying the urgent sample to be tested to the sample extraction place and the extraction assembly is controlled to execute the sample extraction operation on the urgent sample to be tested, and then an extraction operation is sequentially executed on the ordinary samples to be tested according to sequential order in which the carriers carrying the ordinary samples to be tested reach the sample extraction place.

In an embodiment, the method for conveying the sample further includes: the second transfer assembly is provided with at least two sample feeding recesses, the sample feeding recess is used to accommodate the carrier, and an included angle between adjacent sample feeding recesses relative to a rotation center of the second transfer assembly is 90 degrees or 180 degrees.

In an embodiment, the method for conveying the sample further includes: the first transfer assembly is controlled to transfer the carrier carrying the ordinary sample to be tested to the upstream track when a remaining temporary storage number of the first inner track is greater than a preset reserved number and the first recognition assembly recognizes the carrier carrying the ordinary sample to be tested. The remaining temporary storage number is a difference between a total number of the carriers carrying the urgent samples to be tested and the carriers carrying the ordinary samples to be tested that are accommodable on the first inner track and a total number of the carriers carrying the urgent samples to be tested and the carriers carrying the ordinary samples to be tested that are currently accommodated, and the preset reserved number is a minimum number of the carriers carrying the urgent samples to be tested that are accommodable by the first inner track.

In an embodiment, the method for conveying the sample further includes: the first transfer assembly is controlled to transfer the carrier carrying the ordinary sample to be tested from the first outlet to the main track when the remaining temporary storage number of the first inner track is less than or equal to the preset reserved number and the carrier carrying the ordinary sample to be tested reaches the first outlet, and the first transfer assembly is controlled to transfer the carrier carrying the ordinary sample to be tested to the main track when the remaining temporary storage number of the first inner track is less than or equal to the preset reserved number and the first recognition assembly recognizes the carrier carrying the ordinary sample to be tested.

In an embodiment, the controller controls the first transfer assembly to transfer the carrier carrying an untested ordinary sample to be tested from the first outlet to the first inlet to enter the first inner track when the carrier carrying the ordinary sample to be tested reaches the first outlet and the second recognition assembly recognizes the untested ordinary sample to be tested. The second recognition assembly is arranged at the first outlet and is used to recognize the sample type of the sample carried by the carrier reaching the first outlet.

In an embodiment, the method for conveying the sample further includes: the third transfer assembly is controlled to transfer the carrier carrying the urgent sample to be tested from the main track to the second inner track, arrangement order of the carrier carrying the urgent sample to be tested and the carrier carrying the ordinary sample to be tested on the second inner track is determined, and the processing assembly is caused to sequentially process the urgent sample to be tested and the ordinary sample to be tested. The conveying assembly further includes a second inner track, the main track and the second inner track are in communication through the third transfer assembly. The system further includes the processing assembly connected with the second inner track and used to process a sample prior to testing.

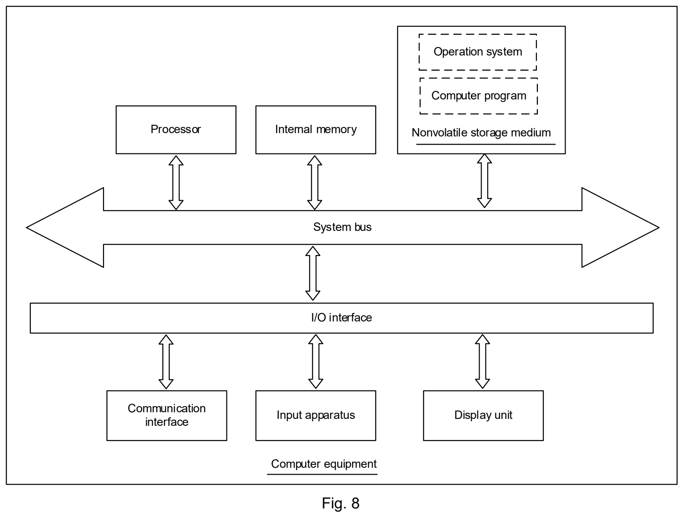

In an embodiment, a computer equipment is provided. The computer equipment can be a terminal, and its internal structure diagram can be shown in Fig. 8. The computer equipment includes a processor, a memory, a communication interface, a display screen and an input apparatus that are connected through a system bus. The processor of the computer equipment is used to provide computing and control capabilities. The memory of the computer equipment includes a nonvolatile storage medium and an internal memory. The nonvolatile storage medium stores an operation system and a computer program. The internal memory provides an environment for operation of the operation system and the computer program of the nonvolatile storage medium. The communication interface of the computer equipment is used for wired or wireless communication with the external terminal, and the wireless mode can be implemented through WIFI, the mobile cellular network, NFC (near field communication) or other technologies. The computer program implements the method for conveying the sample when executed by the processor.

It can be understood by those skilled in the art that the structure shown in Fig. 8 is merely a block diagram of some structure related to the solution of the invention, and does not constitute limitation to the computer equipment to which the solution of the invention is applied. The specific computer equipment can include more or less components than those shown in the figure, or combine some components, or have different component arrangements.

In an embodiment, a computer equipment is provided. The computer equipment includes a memory and a processor. The memory stores a computer program. When executing the computer program, the processor implements the following steps:
a first recognition assembly and a second recognition assembly recognize a sample type of a sample carried by a carrier. The sample type includes an urgent sample to be tested and an ordinary sample to be tested. The first recognition assembly is arranged at a connection port of a first transfer assembly with a main track and a first inner track, the main track and the first inner track are used to drive the carriers to move independently and circularly in a designated direction, and the main track and the first inner track are in communication through the first transfer assembly to allow the carrier to move between the main track and the first inner track. The first inner track has a sample extraction place, and a first inlet and a first outlet that are in communication with the first transfer assembly, the sample extraction place is located between the first inlet and the first outlet, and the second recognition assembly is arranged at the first outlet;
the first transfer assembly is controlled to transfer the carrier carrying the urgent sample to be tested from the main track to the first inner track when the first recognition assembly recognizes that the sample type of the sample carried by the carrier located at the first transfer assembly on the main track is the urgent sample to be tested; and
at least part of original carriers carrying the ordinary samples to be tested on the first inner track are conveyed to the first outlet, and the first transfer assembly is controlled to transfer the carrier carrying an untested ordinary sample to be tested from the first outlet to the first inlet to enter the first inner track when the original carrier carrying the ordinary sample to be tested reaches the first outlet.

Those skilled in the art can understand that all or some processes implementing the method in the embodiment described above can be implemented by related hardware under instructing by the computer program. The computer program can be stored in a nonvolatile computer-readable storage medium, and the computer program can include the processes of the method embodiments described above when executed. Any reference to the memory, the database or other media used in the embodiments according to the invention can include at least one of a nonvolatile memory and a volatile memory. The nonvolatile memory can include a read-only memory (ROM), a magnetic tape, a floppy disk, a flash memory, an optical memory, a high-density embedded nonvolatile memory, a resistive random access memory (ReRAM), a magnetoresistive random access memory (MRAM), a ferroelectric random access memory (FRAM), a phase change memory (PCM), a graphene memory, etc. The volatile memory can include a random access memory (RAM), an external cache memory, etc. The RAM can be in various forms, such as a static random access memory (SRAM) or a dynamic random access memory (DRAM), which is illustrative and non-limitative. The databases involved in the embodiments according to the invention can include at least one of a relational database and a non-relational database. The non-relational databases can include, but is not limited to, a distributed database based on a blockchain. The processor involved in the embodiments according to the invention can include, but is not limited to, a general processor, a central processing unit, a graphics processing unit, a digital signal processor, a programmable logic device, a data processing logic device based on quantum computing, etc.

The technical features of the embodiments described above can be arbitrarily combined. To simplify description, not all possible combinations of the features of the embodiments described above are described. However, the combinations of these technical features should fall within the scope in the description in the case of no conflict.

The embodiments described above are merely several types of implementations of the invention, and are specifically described in detail, but cannot be interpreted as limitation to the scope of the patent for the invention as a result. It should be noted that several variations and improvements can also be made by those of ordinary skill in the art without departing from the concept of the invention, and should fall within the protection scope of the invention. Hence, the protection scope of the invention should be subject to the appended claims.

## Claims

1. A system for conveying a sample, comprising:
a conveying assembly (100) comprising a main track (110) and a first inner track (120), wherein the main track (110) and the first inner track (120) are both used to allow a carrier to move independently and circularly in a designated direction, the carrier is used to carry the sample, and the first inner track (120) has a sample extraction place;
a first transfer assembly (200), wherein the first transfer assembly (200) is arranged between the main track (110) and the first inner track (120) and is used to allow the carrier to move between the main track (110) and the first inner track (120), the first inner track (120) has a first inlet and a first outlet, the first transfer assembly (200) connects the first inlet and the first outlet, and the sample extraction place is located between the first inlet and the first outlet;
an extraction assembly (300), wherein the extraction assembly (300) is arranged at an arrangement place corresponding to the sample extraction place of the first inner track (120) and is used to extract the sample;
a first recognition assembly (400), wherein the first recognition assembly (200) is arranged at a connection port of the first transfer assembly (200) with the main track (110) and the first inlet of the first inner track (120) and is used to recognize a sample type of the sample carried by the carrier entering the first transfer assembly (200) from the main track (110), and the sample type comprises an urgent sample to be tested and an ordinary sample to be tested; and
a controller (500), wherein the controller (500) is used to control the first transfer assembly (200) to transfer the carrier carrying the urgent sample to be tested from the main track (110) to the first inner track (120) when the first recognition assembly (400) recognizes the urgent sample to be tested,
and
convey at least part of original carriers carrying the ordinary samples to be tested on the first inner track (120) to the first outlet, and the controller (500) is used to control the first transfer assembly (200) to transfer the carrier carrying an untested ordinary sample to be tested from the first outlet to the first inlet to enter the first inner track (120) when the original carrier carrying the ordinary sample to be tested reaches the first outlet.

2. The system according to claim 1, further comprising:
a second transfer assembly (123), wherein the second transfer assembly (123) is arranged on the first inner track (120) and is used to transfer the carrier to the sample extraction place, a track from the first inlet to the second transfer assembly (123) is an upstream track (121) of the first inner track (120), and a track from the second transfer assembly (123) to the first outlet is a downstream track (122) of the first inner track (120); and
a detection assembly (600), wherein the detection assembly (600) is arranged at an inlet of the second transfer assembly (123) on the first inner track (120) and is used to detect a target carrier, and the target carrier is a carrier reaching a detection area of the detection assembly (600); wherein
the controller (500) is used to control the extraction assembly (300) to execute a sample extraction operation on a sample to be tested carried by the target carrier and then control the second transfer assembly (123) to convey the carrier carrying the ordinary sample to be tested behind the target carrier on the first inner track (120) to the downstream track (122) after the carrier carrying the urgent sample to be tested enters the first inner track (120).

3. The system according to claim 2, wherein after the second transfer assembly (123) conveys the carrier carrying the ordinary sample to be tested behind the target carrier on the first inner track (120) to the downstream track (122), the controller (500) is further used to:
control the second transfer assembly (123) to transfer the carrier carrying the urgent sample to be tested to the sample extraction place and control the extraction assembly (300) to execute the sample extraction operation on the urgent sample to be tested, and then sequentially execute the sample extraction operation on the ordinary samples to be tested according to sequential order in which the carriers carrying the ordinary samples to be tested reach the sample extraction place.

4. The system according to claim 2, wherein the second transfer assembly (123) is provided with at least two sample feeding recesses, the sample feeding recess is used to accommodate the carrier, and an included angle between adjacent sample feeding recesses relative to a rotation center of the second transfer assembly (123) is 90 degrees or 180 degrees.

5. The system according to claim 2, wherein the controller (500) is further used to control the first transfer assembly (200) to transfer the carrier carrying the ordinary sample to be tested to the upstream track (121) when a remaining temporary storage number of the first inner track (120) is greater than a preset reserved number and the first recognition assembly (400) recognizes the carrier carrying the ordinary sample to be tested, wherein the remaining temporary storage number equals a difference between a total number of the carriers carrying the urgent samples to be tested and the carriers carrying the ordinary samples to be tested that are accommodable on the first inner track (120) and a total number of the carriers carrying the urgent samples to be tested and the carriers carrying the ordinary samples to be tested that are currently accommodated, and the preset reserved number equals a number of temporary storage places reserved in advance by the first inner track (120) for the carriers carrying the urgent samples to be tested.

6. The system according to claim 5, wherein the controller (500) is further used to control the first transfer assembly (200) to transfer the carrier carrying the ordinary sample to be tested from the first outlet to the main track (110) when the remaining temporary storage number of the first inner track (120) is less than or equal to the preset reserved number and the carrier carrying the ordinary sample to be tested reaches the first outlet,
and
to control the first transfer assembly (200) to transfer the carrier carrying the ordinary sample to be tested to the main track (110) when the remaining temporary storage number of the first inner track (120) is less than or equal to the preset reserved number and the first recognition assembly (400) recognizes the carrier carrying the ordinary sample to be tested.

7. The system according to any one of claims 1 to 6, further comprising:
a second recognition assembly (700), wherein the second recognition assembly (700) is arranged at the first outlet and is used to recognize the sample type of the sample carried by the carrier reaching the first outlet; and
when the carrier carrying the ordinary sample to be tested reaches the first outlet and the second recognition assembly (700) recognizes an untested ordinary sample to be tested, the controller (500) controls the first transfer assembly (200) to transfer the carrier carrying the untested ordinary sample to be tested from the first outlet to the first inlet to enter the first inner track (120).

8. The system according to claim 1, wherein the conveying assembly further comprises a second inner track (130), the main track (110) and the second inner track (130) are in communication through a third transfer assembly (900), and the system further comprises a processing assembly (800) connected with the second inner track (130) and used to process a sample prior to testing; and
the controller (500) is further used to control the third transfer assembly (900) to transfer the carrier carrying the urgent sample to be tested from the main track **(110)** to the second inner track (130), determine arrangement order of the carrier carrying the urgent sample to be tested and the carrier carrying the ordinary sample to be tested on the second inner track (130), and cause the processing assembly (800) to sequentially process the urgent sample to be tested and the ordinary sample to be tested.

9. A method for conveying a sample, comprising:
recognizing a sample type of the sample carried by a carrier , through a first recognition assembly (400) and a second recognition assembly (700), wherein the sample type comprises an urgent sample to be tested and an ordinary sample to be tested; the first recognition assembly (400) is arranged at a connection port of a first transfer assembly (200) with a main track (110) and a first inner track (120), the main track (110) and the first inner track (120) are used to drive the carrier to move independently and circularly in a designated direction, and the main track (110) and the first inner track (120) are in communication through the first transfer assembly (200) to allow the carrier to move between the main track (110) and the first inner track (120); and the first inner track (120) has a sample extraction place, and a first inlet and a first outlet that are in communication with the first transfer assembly, the sample extraction place is located between the first inlet and the first outlet, and the second recognition assembly (700) is arranged at the first outlet;
controlling the first transfer assembly (200) to transfer the carrier carrying the urgent sample to be tested from the main track (110) to the first inner track (120) when the first recognition assembly (400) recognizes that the sample type of the sample carried by the carrier located at the first transfer assembly (200) on the main track (110) is the urgent sample to be tested;
conveying at least part of original carriers carrying the ordinary samples to be tested on the first inner track (120) to the first outlet; and
controlling the first transfer assembly (200) to transfer the carrier carrying an untested ordinary sample to be tested from the first outlet to the first inlet to enter the first inner track (120) when the original carrier carrying the ordinary sample to be tested reaches the first outlet.

10. A computer equipment, comprising a memory and a processor, wherein the memory stores a computer program, and the processor implements steps of the method according to claim 9 when executing the computer program.
